# EUROPÄISCHE PATENTSCHRIFT

(11) **EP 0 930 928 B1**
(45) Veröffentlichungstag und Bekanntmachung des Hinweises auf die Patenterteilung: **04.04.2001**
(21) Anmeldenummer: 97909286.3
(22) Anmeldetag: 18.09.1997
(51) Int. Cl.: B01D 35/30, B01D 27/08, F02M 37/22

(54) **FILTER FÜR FLÜSSIGKEITEN**
FILTER FOR LIQUIDS
FILTRE POUR LIQUIDES

(30) Priorität: 25.09.1996 DE 19639278
(43) Veröffentlichungstag der Anmeldung: 28.07.1999
(73) Patentinhaber: FILTERWERK MANN & HUMMEL GmbH, 71631 Ludwigsburg (DE)
(72) Erfinder: PAVLIN, Jaroslav, D-71691 Freiberg (DE); JAINEK, Herbert, D-74074 Heilbronn (DE)
(74) Vertreter: Voth, Gerhard, Dipl.-Ing.
(86) Internationale Anmeldenummer: EP9705116
(87) Internationale Veröffentlichungsnummer: WO9813121

(56) Entgegenhaltungen:
- EP-B- 0 269 895
- EP-B- 0 413 896
- US-A- 5 374 355
- US-A- 5 445 734

## Beschreibung

Die Erfindung betrifft ein Filter für Flüssigkeiten nach dem Oberbegriff des Hauptanspruches.

Ein solches Filter ist beispielsweise aus der DE 43 30 840 C1 bekannt. Dieses Filter ist insbesondere für Kraftstoff oder Öl geeignet, mit einem im wesentlichen stehend angeordneten Filtergehäuse und mit einer im Filtergehäuse angeordneten hohlzylinderförmigen Filterpatrone, wobei das Filtergehäuse einen Sockel aufweist mit einem Zulauf für die zu reinigende Flüssigkeit zum Außenumfang der Filterpatrone und mit einem Ablauf für gereinigte Flüssigkeit vom Innenraum der Filterpatrone. In dem Filtergehäuse befindet sich ein zentrales Standrohr. Das Filtergehäuse ist oberseitig durch einen lösbaren Deckel verschlossen.

Zur Gewichts- und Kostenreduktion werden solche Filter in verstärktem Maße in Kunststoff hergestellt. Dabei bietet sich thermoplastischer Kunststoff und das Spritzgießverfahren an. Das Fließverhalten von thermoplastischem Kunststoff auch nach dem Aushärten, d. h. also während der Betriebszeit des Filters, macht es erforderlich, daß spezielle konstruktive Maßnahmen ergriffen werden müssen, um Dichtheitsprobleme zu vermeiden. Das bekannte Filter ist im Bereich der Schraubverbindung von Deckel und Gehäuse mit einem Dichtring ausgestattet, welcher Leckverluste vermeiden soll. Es hat sich jedoch in der Praxis gezeigt, daß ein solcher Dichtring, insbesondere bei starker thermischer Beanspruchung des Filters nicht ausreicht. Es wurden deshalb Versuche angestellt, mehrere Dichtelemente in den Dichtungsbereich zu integrieren. Auch hier traten jedoch Dichtheitsprobleme auf.

Aus der EP B 0 269 895 ist es bekannt ein Flüssigkeitsfilter, bestehend einem Gehäuse mit darin angeordnetem Filtereinsatz, einem Rohflüssigkeitszulauf, einem Reinflüssigkeitsablauf, sowie einem das Gehäuse verschließenden Deckel aufzubauen. An der Kontaktstelle zwischen Deckel und Gehäuse ist eine Dichtung vorgesehen, auf die beim Verschließen des Deckels eine axialgerichtete als auch eine radialgerichtete Kraft ausübbar ist.

Ebenso ist aus der US A 5 445 734 ein Wasserfilter bekannt, der zwischen Deckel und Gehäuseteil einen Dichtung aufweist die beim Verschließen eine axiale und radiale Kraft aufnimmt.

Ein Nachteil des Standes der Technik ist darin zu sehen, dass keine Verteilung der Kraft in axialer bzw. radialer Richtung nach bestimmten vorgegebenen Kriterien vorgenommen werden kann. Dadurch besteht die Gefahr, dass die Dichtung, insbesondere bei hohen Innendrücken nicht zuverlässig abdichtet und damit Flüssigkeit aus dem Filter austreten kann.

Der Erfindung liegt daher die Aufgabe zugrunde, ein Filter, insbesondere für Flüssigkeiten zu schaffen, das die genannten Nachteile vermeidet und in der Lage ist, ein kostengünstiges und gewichtsoptmiertes System zu schaffen, welches eine hohe Zuverlässigkeit aufweist.

Diese Aufgabe wird ausgehend von dem Oberbegriff des Hauptanspruches durch dessen kennzeichnende Merkmale gelöst.

Der Grundgedanke der Erfindung liegt darin, ein Dichtungssystem zu schaffen, welches bei einem Flüssigkeitsdruck der im Inneren des Filtergehäuses herrscht, nicht zu einer Verringerung der Dichtwirkung, sondern eher zu einer Erhöhung der Dichtwirkung beiträgt.
Dies wurde damit erzielt, daß die Dichtung beim Verschließen des Gehäuses mit dem Deckel sowohl axiale als auch radiale Kräfte aufnimmt und damit auch Dichtwirkung in axialer und radialer Richtung entfaltet. Durch den Flüssigkeitsdruck im Inneren des Gehäuses erhöht sich die radiale Dichtungswirkung und das Abdichtungsverhalten. Ausserdem ist vorgesehen, den Deckel mit einer Dichtungsnut zu versehen, in welchem sich die Dichtung, welche kein besonderes Profil aufweisen muß, befindet. Am Gehäuse ist ein Ansatz mit einer schrägverlaufenden Stirnfläche angeordnet. Die schrägverlaufende Stirnfläche wirkt auf die Dichtung ein und erzeugt damit die radiale und axiale Dichtungswirkung.

Dieser Ansatz ist mit seiner Stirnfläche nach innen geneigt. Dadurch legt sich die Dichtung an den Innendurchmesser der Nut an. Gleichzeitig findet eine Abstützung zwischen Dichtung und Stirnfläche statt, welche geeignet ist, einen hohen inneren Druck der Flüssigkeit aufzufangen. Der Deckel ist vorzugsweise mit einer Schraubverbindung mit dem Gehäuse verbunden. Selbstverständlich besteht auch die Möglichkeit, eine Bajonettverbindung vorzusehen.

In dem Filtergehäuse ist ein Filtereinsatz angeordnet. Dieser stützt sich auf einem gehäusefesten oder am Deckel fixierten Mittelrohr ab.

In einer weiteren Ausgestaltung der Erfindung ist im Dichtungsbereich zwischen Gehäuse und Deckel ein Abstreifelement vorgesehen. Dieses Abstreifelement verhindert beim Öffnen des Deckels ein unbeabsichtigtes austreten der Flüssigkeit. Zweckmäsigerweise ist bei einem solchen Filter ein Flüssigkeitsablauf vorgesehen, der sich öffnet wenn der Deckel entfernt wird. Damit die Flüssigkeit ablaufen kann muß das Abstreifelement beim Öffnen des Deckels, für einen bestimmten Deckelhub noch eine Dichtfunktion übernehmen, dies wird dadurch erziehlt, daß das Abstreifelement entlang einer Dichtfläche des Deckel gleitet..

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Ausführungsbeispieles näher erläutert.

Es zeigt:
Figur 1 ein Filter für Flüssigkeiten
Figur 2 eine Detaildarstellung des Abdichtbereichs

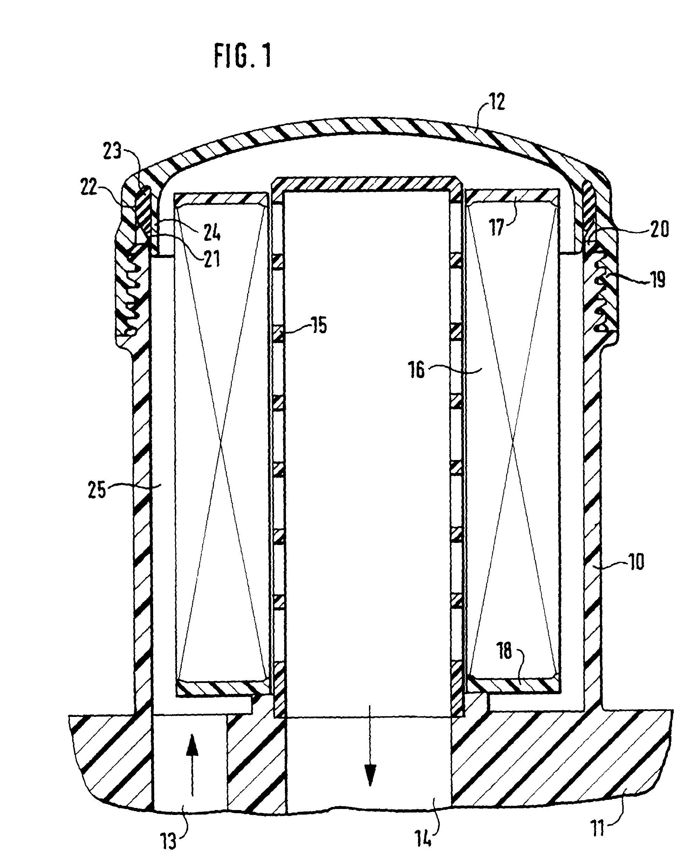

Die Figur 1 zeigt in einer Schnittdarstellung ein Filter für Flüssigkeiten mit einem Filtergehäuse 10, welches an einem Grundkörper 11 angeordnet ist. Das Filtergehäuse 10 ist mit einem Deckel 12 verschlossen. In dem Grundkörper befindet sich ein Flüssigkeitszulauf 13 für die Rohflüssigkeit und ein Flüssigkeitsablauf 14 für die Reinflüssigkeit.

In dem Filtergehäuse ist ein Mittelrohr 15 vorgesehen. Auf diesem Mittelrohr stützt sich ein Filtereinsatz 16 ab. Der Filtereinsatz 16 besteht aus einem zickzackförmig gefalteten Filterpapier oder Filtervlies, welches an den Stirnseiten mit Endscheiben abgedichtet ist. Die Endscheiben 17, 18 bilden gleichzeitig die radiale Abdichtung des Filtereinsatzes und damit die Abdichtung zwischen Rohflüssigkeitsraum 25 und Reinflüssigkeitsraum 26. Sowohl das Filtergehäuse 10 als auch der Deckel 12 und das Mittelrohr 15 bestehen aus einem thermoplastischen Kunststoff. Der Deckel ist mit dem Filtergehäuse 10 über eine Schraubverbindung 19 befestigt. Das Filtergehäuse 10 weist an seinem oberen Ende einen Ansatz 20 auf. Dieser ist mit einer nach innen gerichteten Stirnfläche 21 versehen. In dem Deckel 12 befindet sich eine Dichtungsnut 22. In diese Dichtungsnut ist eine ringförmige Dichtung 23 eingelegt. Beim Verschließen des Deckels legt sich die Stirnfläche 21 an die Dichtung 23 an, durch den schrägen Verlauf der Stirnfläche 21 wird die Dichtung nach innen zu der Innenwandung 24 der Dichtungsnut hin bewegt. Damit erfolgt eine radiale Abdichtung zwischen dem Ansatz 20 und der Innenwandung Nut 22 des Deckels 12.

Sobald sich im Gehäuse ein Flüssigkeitsdruck aufbaut, bewirkt dieser eine Verstärkung der Dichtungswirkung bzw. ein Andrücken der Dichtung an die Stirnfläche 21. Selbstverständlich läßt sich die Art der Abdichtung auch bei einem Metallgehäuse und einem Kunststoffdeckel bzw. einem Metallgehäuse und -deckel anwenden. Der Vorteil der Dichtungsart liegt in der Aufnahme hoher Innendrücke durch die Kombination von radialer und axialer Dichtungswirkung.

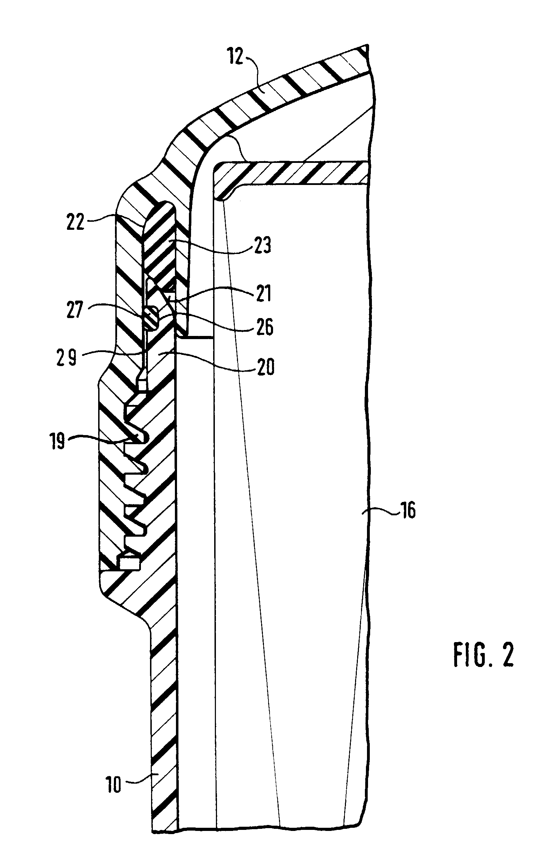

Figur 2 zeigt in einer Detaildarstellung den Abdichtbereich des Filters, dabei ist zu erkennen, daß die Dichtung 23 in ihrem oberen Bereich an den Verlauf der Nut 22 angepaßt ist. Im unteren Bereich, das heißt dem Filtergehäuse zugewandten Bereich ist die Dichtung oval ausgeformt, dabei ist der Scheitelpunkt etwas nach innen versetzt, so daß beim auftreffen der Stirnflächen 21 auf die Dichtung 23 diese Dichtung seitlich des Scheitelpunkts an der Stirnfläche 21 entlang gleiten kann und damit eine definierte Abdichtung gewährleistet wird. Am Ansatz 20 befindet sich eine Nut 26 in diese ist ein Abstreifelement in Form eines O-Rings 27 eingelegt. Wird der Deckel von dem Filtergehäuse abgeschraubt, dann gleitet das Abstreifelement 27 entlang einer Gleit-oder Dichtfläche 29 des Deckels 12 und verhindert ein zu frühes Austreten der Flüssigkeit aus dem Filtergehäuse. Erst wenn sich das Abstreifelement 27 im Bereich des Gewindes 19 des Deckels 12 befindet, wird die Dichtfunktion des Abstreifelements 27 aufgehoben. Anstelle eines separaten Abstreifelements kann auch beispielsweise im Zweikomponentenkunststoffspritzgießverfahren ein Elastomerkunststoff an den Ansatz 20 angespritzt werden. Es besteht die
Möglichkeit den Elastomerkunststoff als umlaufende Dichtlippe oder als mehrere umlaufende Dichtlippen auszubilden.

## Patentansprüche

1. Filter, insbesondere für Flüssigkeiten, bestehend aus einem Filtergehäuse, einem in dem Gehäuse angeordneten Filtereinsatz, einem Rohflüssigkeitszulauf, einem Reinflüssigkeitsablauf sowie einem das Gehäuse verschließenden Deckel wobei an der Kontaktstelle zwischen Deckel (12) und Gehäuse (10) eine Dichtung (23) vorgesehen ist, wobei auf die Dichtung (23) beim Verschließen des Deckels (12) sowohl eine axial gerichtete Kraft als auch eine radial gerichtete Kraft ausübbar ist und damit die Dichtung (23) bei einer Relativbewegung zwischen Deckel (12) und Gehäuse (10) in Axialrichtung und Radialrichtung abdichtet, dadurch gekennzeichnet, daß die Dichtung (23) an ihrer Kontaktstelle mit dem Deckel (12), der Kontur des Deckels (12) angepaßt ist und an ihrer Kontaktstelle mit dem Gehäuse (10) eine im wesentlichen ovale Form aufweist, wobei der Scheitelpunkt des Ovals so positioniert ist, daß der Kontakt mit dem Gehäuse (10) seitlich des Scheitelpunktes erfolgt.

2. Filter nach Anspruch 1, dadurch gekennzeichnet, daß an Deckel (12) und Gehäuse (10) eine Schraubverbindung (19) vorgesehen ist.

3. Filter nach einem der Ansprüche 1 oder 2, dadurch gekennzeichnet, daß an Deckel (12) und Gehäuse (10) eine Bajonettverbindung vorgesehen ist.

4. Filter nach einem der vorherigen Ansprüche, dadurch gekennzeichnet, daß der Filtereinsatz (16) aus einer metallfreien Patrone besteht, die im wesentlichen aus einem zickzackförmig gefalteten Filtermedium mit Stimendscheiben (17, 18) gebildet ist, wobei sich der Filtereinsatz (16) an einem Mittelrohr (15) abstützt.

5. Filter nach einem der vorherigen Ansprüche, dadurch gekennzeichnet, daß der Deckel (12) und/oder das Gehäuse (10) aus einem thermoplastischen Kunststoff besteht.

6. Filter nach einem der vorherigen Ansprüche, dadurch gekennzeichnet, daß zwischen Gehäuse (10) und Deckel (12) ein Abstreifelement vorgesehen ist.

7. Filter nach Anspruch 6, dadurch gekennzeichnet, daß im Ansatz (20) des Gehäuses (10) eine Nut angeordnet ist, in welchem sich das Abstreifelement (27) befindet.

## Claims

1. Filter, more especially for liquids, comprising a filter housing, a filter insert disposed in the housing, an unfiltered liquid inlet, a filtered liquid outlet and a cover which closes the housing, a seal (23) being provided at the point of contact between cover (12) and housing (10), both an axially orientated force and a radially orientated force being exertable on the seal (23) during closure of the cover (12) and, in consequence, the seal (23) sealing in the axial direction and radial direction during a relative movement between cover (12) and housing (10), characterised in that, at its point of contact with the cover (12), the seal (23) is adapted to the configuration of the cover (12), and has a substantially oval form at its point of contact with the housing (10), the crown of the oval being so positioned that contact with the housing (10) is made laterally of the crown.

2. Filter according to claim 1, characterised in that a screw connection (19) is provided at cover (12) and housing (10).

3. Filter according to one of claims 1 or 2, characterised in that a bayonet-type connection is provided at cover (12) and housing (10).

4. Filter according to one of the previous claims, characterised in that the filter insert (16) comprises a metal-free cartridge substantially formed from a filter medium, which is folded in a zig-zag manner and provided with end plates (17, 18), the filter insert (16) being supported on a central tube (15).

5. Filter according to one of the previous claims, characterised in that the cover (12) and/or the housing (10) are/is formed from a thermoplastic plastics material.

6. Filter according to one of the previous claims, characterised in that a deflector is provided between housing (10) and cover (12).

7. Filter according to claim 6, characterised in that a groove is disposed in the extension (20) of the housing (10), and the deflector (27) is situated in said groove.

## Revendications

1. Filtre, en particulier pour liquides, composé d'un carter, d'un élément filtrant incorporé dans ce carter, d'une arrivée de liquide à filtrer, d'une évacuation de liquide après filtration, ainsi que d'un couvercle fermant le carter, dans lequel un joint (23) est prévu à l'endroit de contact entre le carter (10) et le couvercle (12), et lors de la fermeture du couvercle (12), une force aussi bien axiale que radiale peut s'exercer sur le joint (23) pour que lors d'un déplacement relatif entre le carter (10) et le couvercle (12), le joint (23) applique son étanchéité aussi bien en direction axiale qu'en direction radiale,
caractérisé en ce que
le joint (23) est adapté sur sa surface de contact avec le couvercle (12), au contour de ce couvercle (12) et présente, sur sa surface de contact avec le carter (10), une forme sensiblement ovale, de telle sorte que le contact avec le carter (10) se trouve disposé latéralement par rapport au sommet de cet ovale.

2. Filtre selon la revendication 1,
caractérisé en ce que
sur le couvercle (12) et le carter (10) est disposée une liaison par vis (19).

3. Filtre selon la revendication 1,
caractérisé en ce que
sur le couvercle (12) et le carter (10) est disposée une liaison à baïonnette.

4. Filtre selon l'une quelconque des revendication précédentes,
caractérisé en ce que
l'élément filtrant (16) est constitué d'une cartouche sans métal formée essentiellement d'un media filtrant replié en zigzag avec des flasques frontaux (17, 18), l'élément filtrant (16) s'appuyant sur un tube médian (15).

5. Filtre selon l'une quelconque des revendications précédentes,
caractérisé en ce que
le couvercle (12) et/ou le carter (10) sont constitués d'un matériau thermoplastique.

6. Filtre selon l'une quelconque des revendications précédentes,
caractérisé en ce que
entre le carter (10) et le couvercle (12) est intercalé un élément racleur.

7. Filtre selon la revendication 6,
caractérisé en ce que,
dans le prolongement (20) du carter (10), se trouve une rainure dans laquelle est disposé l'élément racleur (27).
